# EUROPÄISCHE PATENTSCHRIFT

(11) **EP 1 998 010 B1**
(45) Veröffentlichungstag und Bekanntmachung des Hinweises auf die Patenterteilung: **13.07.2011**
(21) Anmeldenummer: 08156340.5
(22) Anmeldetag: 16.05.2008
(51) Int. Cl.: F01D 25/16

(54) **Lagereinrichtung eines Turboladers**
Bearing arrangement of a turbocharger
Agencement de palier d'un chargeur turbo

(30) Priorität: 30.05.2007 DE 102007025130
(43) Veröffentlichungstag der Anmeldung: 03.12.2008
(73) Patentinhaber: Bosch Mahle Turbo Systems GmbH & Co. KG, 70376 Stuttgart (DE)
(72) Erfinder: Fedyna, Achim, 73441, Aufhausen (DE); Hanslik, Karl-Heinz, 70329, Stuttgart (DE); Voges, Achim, 71563, Affalterbach (DE); Weisz, Rafael, 71334, Waiblingen (DE)
(74) Vertreter: BRP Renaud & Partner

(56) Entgegenhaltungen:
- EP-A1- 0 230 885
- EP-A2- 0 781 908
- CH-A- 407 665
- DE-A1- 4 230 037
- US-A- 3 811 741

## Beschreibung

Die Erfindung betrifft eine Lagereinrichtung eines Turboladers nach dem Oberbegriff des Patentanspruchs 1.

Eine solche Lagereinrichtung ist aus EP 0 781 908 A2 bekannt.

Die Erfindung beschäftigt sich mit dem Problem, bei einer gattungsgemäßen Lagereinrichtung eine Möglichkeit für eine konstruktiv einfache axiale Justierung der Lagerbuchse zu schaffen. Eine solche Justiermöglichkeit ist erwünscht, um insbesondere ein funktionsoptimales Lagerspiel des Verdichterrades innerhalb des dieses umgebenden Verdichtergehäuses bei unvermeidbaren Fertigungstoleranzen der Lagereinrichtung einschließlich der Lagerung des Verdichterrades in dem Verdichtergehäuse einstellen zu können.

Zweckmäßige und vorteilhafte Ausgestaltungen der Erfindung sind Gegenstand der Unteransprüche.

Die Erfindung beruht auf dem allgemeinen Gedanken, die Lagerbuchse mit einem radial an dieser angreifenden Sicherungsstift derart lagezusichern, dass durch ein einfaches Verdrehen des Stiftes eine Justierung der axialen Position der Lagerungsbuchse innerhalb der Gehäusenabe möglich ist. Ermöglicht wird dies dadurch, dass der Sicherungsstift mit einem Sicherungsbereich versehen ist, der kreiszylindrische Form besitzt, gegenüber der Drehachse des Stiftes exzentrisch angeordnet ist und mit diesem Bereich in eine Ausnehmung der Lagerbuchse eingreift. Die Ausnehmung innerhalb der Lagerbuchse muss in Umfangsrichtung der Lagerbuchse ein Spiel gegenüber dem Stiftsicherungsbereich aufweisen, damit eine Axialverstellung der Lagerbuchse möglich ist. Die Ausnehmung kann als eine geschlossene Langlochbohrung mit einer Ausrichtung der Langlochachse in Umfangsrichtung der Lagerbuchse ausgebildet sein oder als eine auf dem Umfang der Lagerbuchse verlaufende Tangentialnut.

Der Stift kann als in die Nabe über ein Gewinde einschraubbar ausgebildet sein. Die nach einer Axialjustierung der Lagerbuchse gegebene Drehposition des Stiftes kann durch übliche Maßnahmen zur Sicherung eines Gewindeteiles gegen Drehen gesichert werden. Denkbar sind der Einsatz eines Gewindeklebstoffes, eine Körnung der Gewindeverbindung, eine verdrehgesicherte Gewindeausführung oder ähnliche, für eine Gewindeverdrehsicherung übliche Maßnahmen und Mittel.

Vorteilhafte, nachstehend näher erläuterte Ausführungsbeispiele sind in der Zeichnung dargestellt.

In dieser zeigen
- Fig. 1: einen Schnitt durch den Lagerbereich einer Turboladerwelle mit an deren axialen Enden einenends einem angebundenen Turbinenrad und einem anderenends angebundenen Verdichterrad und einem radial in eine umfangsmäßig geschlossene Ausnehmung der Lagerbuchse eingreifenden Sicherungsstift,
- Fig. 2: eine perspektivische Darstellung einer Lagerbuchse mit einem Langloch und einem in dieses eingreifenden Sicherungs-Stift,
- Fig. 3: einen Schnitt durch ein Turboladergehäuse mit einem an dem Umfang der Lagerbuchse angreifenden Sicherungsstift in einer ersten Ausführung,
- Fig. 4: eine perspektivische Ansicht einer Lagerbuchse aus der Einrichtung nach Fig. 3 mit einem in eine an dem Umfang der Lagerbuchse vorgesehene Tangentialnut eingreifenden Sicherungsstift,
- Fig. 5: eine zweite Ausführungsform der Einrichtung nach Fig. 3,
- Fig. 6: einen vergrößerten Ausschnitt aus der Einrichtung nach Fig. 5.

In einem Turboladergehäuse 1 ist in einer Nabe 2 dieses Gehäuses 1 über eine Lagerbuchse 3 innerhalb dieser Nabe 2 eine Turbolader-Welle 4 gelagert. Fest mit der Welle 4 verbunden sind einenends ein Turbinenrad 5 und anderenends ein Verdichterrad 6.

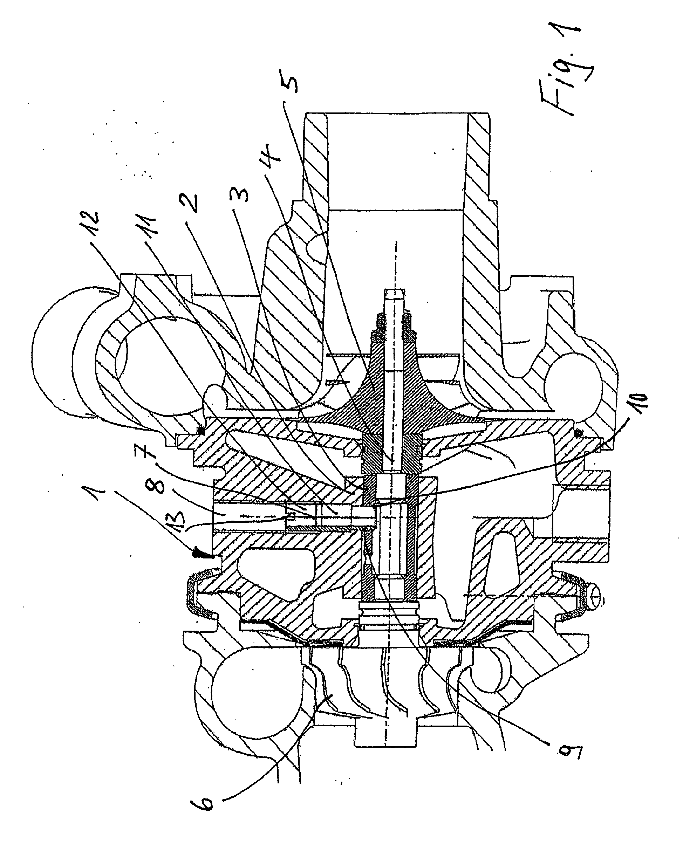

Die Lagerbuchse 3 weist eine schwimmende Lagerung sowohl innerhalb der Nabe 2 als auch gegenüber der Welle 4 auf. Dabei ist die schwimmende Lagerung zwischen der Lagerbuchse 3 und der Nabe 2 eng begrenzt. Diese Begrenzung wird erzeugt durch einen Lagesicherungs-Stift 7. Dieser Stift 7 lagert bei der Ausführung nach Fig. 1 in einer radial auf die Lagerbuchse 3 zu führenden Bohrung 8 innerhalb der Nabe 2. Aus der Bohrung 8 greift der Stift 7 mit einem Sicherungsbereich 9 in eine Ausnehmung 10 der Lagerbuchse 3 ein.

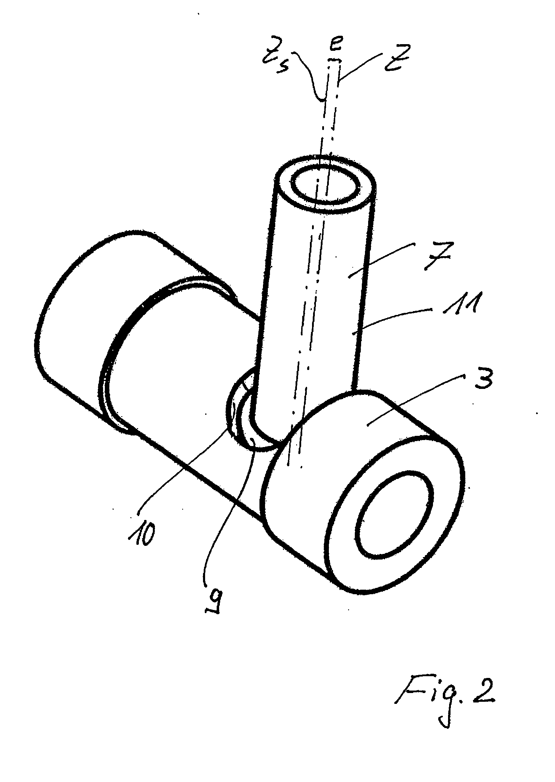

Der Sicherungs-Stift 7 setzt sich in axialer Richtung aus drei Bereichen zusammen. An den Sicherungsbereich 9 schließt sich ein Zentrierbereich 11 an, dem ein, das dem Sicherungsbereich 9 entgegengesetzte Ende des Stiftes 7 bildender Gewindeabschnitt 12 folgt. In dem Gewindeabschnitt 12 ist stirnseitig ein Schlitz 13 für das Ansetzen eines Werkzeuges zum Verdrehen des Stiftes 7 vorgesehen. Der Zentrierbereich 11 ist als ein kreiszylindrischer Abschnitt ausgebildet. Dem Zentrierbereich 11 ist eine Zentrier- beziehungsweise Drehachse Z für den Stift 7 zugeordnet. Gegenüber dieser Zentrierachse ist der Sicherungsbereich 9 als ein kreiszylindrischer, exzentrisch versetzter Abschnitt mit einer ExzenterAchse Zₛ ausgebildet. Die beiden Achsen Z und Zₛ sind um ein in Fig. 2 dargestelltes Exzentermaß "e" gegeneinander versetzt. Die Ausnehmung 10 innerhalb der Lagerbuchse 3 ist bei der Ausführung nach Fig. 1 als ein Langloch mit in Umfangsrichtung der Lagerbuchse 3 verlaufender Langlochachse ausgebildet.

Der Stift 7 ist bei der Ausführung nach Fig. 1, 2 mit einer Durchgangsbohrung versehen, um durch den Stift 7 hindurch Schmieröl in die Lagerbuchse 3 einführen zu können.

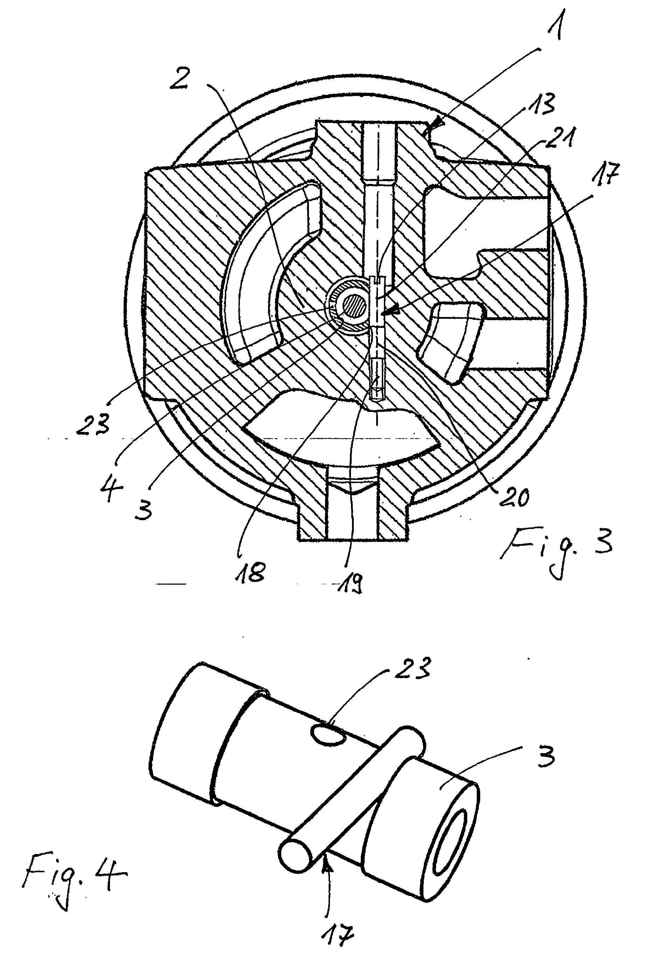

Durch ein Verdrehen des Stiftes 7 um die Zentrierachse Z kann über dessen exzentrischem Sicherungsbereich 9 eine axiale Verstellung, das heißt Justierung der Lagerbuchse 3 innerhalb der Nabe 2 des Turbolader-Gehäuses 1 erreicht werden. Nach erfolgter Justierung wird das Gewinde zwischen dem Stift 7 und der Nabe 2 in einer im Maschinenbau üblichen Weise verdrehgesichert. Die Ausführung der Lagereinrichtung nach Fig. 3 unterscheidet sich von derjenigen nach Fig. 1 lediglich dadurch, dass der Sicherungsstift, der dort mit 17 bezeichnet ist, nicht in ein Langloch der Lagerbuchse eingreift, sondern in eine Tangentialnut 18 am Außenumfang der Lagerbuchse 3.

Dieser Sicherungsstift 17 besitzt ebenso wie der Sicherungs-stift 7 in axialer Richtung 3 Abschnitte, nämlich einen Gewindeabschnitt 19, einen Zentrierabschnitt 20 sowie einen Sicherungsabschnitt 21. Funktionell entsprechen diese Abschnitte denjenigen des Sicherungsstiftes 7 bei der Ausführung nach Fig. 1. Einbringbar, das heißt eindrehbar in die Nabe 2 ist der Sicherungsstift 17 durch eine in der Nabe 2 vorgesehene Schmieröl-Zuführbohrung 22. Der Sicherungsstift 17 greift derart in das innerhalb der Nabe 2 liegende Ende der Zuführbohrung 22 ein, dass um den Stift 17 herum Schmieröl der Lagerbuchse 3 zugeführt werden kann. Innerhalb der Lagerbuchse 3 befindet sich ein radial verlaufender Durchgangskanal 23. Dieser Durchgangskanal 23 dient dazu, Schmieröl aus einem Ringraum zwischen der Lagerbuchse 3 und der Nabe 2 in einen inneren, zwischen der Lagerbuchse 3 und der Welle 4 liegenden Ringraum einführen zu können.

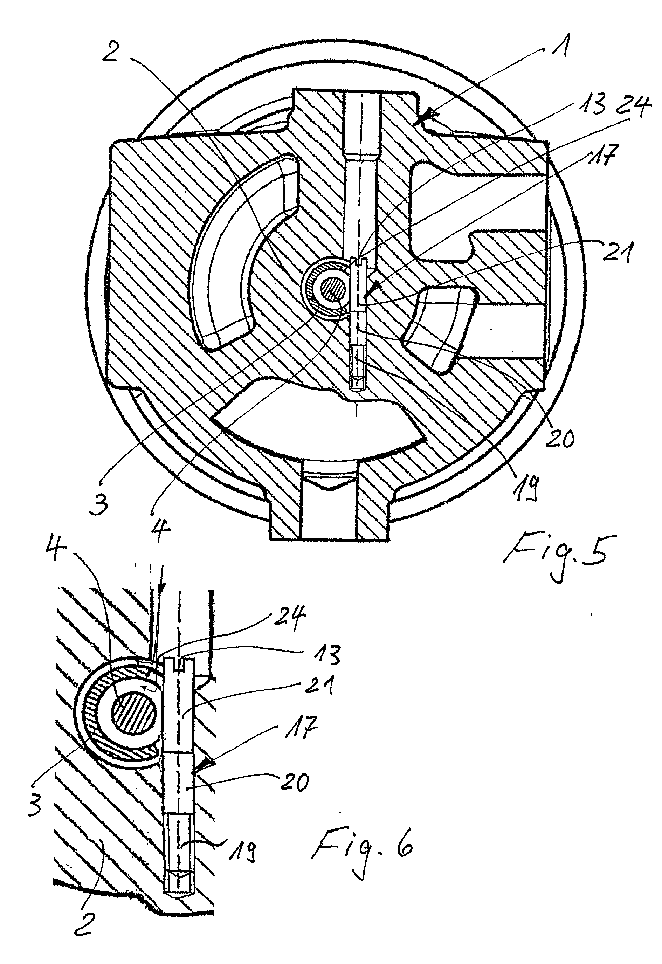

Die Ausführung nach Fig. 5 entspricht derjenigen nach Fig. 3 mit lediglich dem Unterschied, dass dort ein funktionell mit dem Durchgangskanal 23 übereinstimmender Durchgangskanal 24 direkt in die Tangentialnut 18 der Lagerbuchse 3 integriert ist.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Lagereinrichtung eines Turboladers, insbesondere für Kraftfahrzeugmotoren, zur Lagerung einer gemeinsamen Turbine-/Verdichter-Welle (4) in einer von einem Gehäuse (1) des Turboladers gebildeten oder mit diesem fest verbundenen, zwischen Turbinen- und Verdichterrad (5; 6) liegenden Nabe (2) über eine innerhalb dieser Nabe (2) eng begrenzt schwimmend gegenüber gleichermaßen der Nabe (2) und der Welle (4) gelagerte Lagerbuchse, bei der
- durch einen, von der Nabe (2) radial in die Lagerbuchse (3) eingreifenden Stift (7) eine Lagesicherung der Lagerbuchse (3) gegeben ist,
- ein in die Lagerbuchse (3) eingreifender Teilbereich des Stiftes (7) als kreiszylindrischer Stift-Sicherungsbereich (9) ausgebildet ist,
- der Stift (7) zumindest bei der Montage um eine Stift- beziehungsweise Zentrierachse drehbar ist,
**gekennzeichnet durch** die Merkmale,
- der Stift-Sicherungsbereich (9) ist gegenüber der Stiftbeziehungsweise Zentrierachse exzentrisch versetzt,
- in der Lagerbuchse (3) ist für den Eingriff des Stift-Sicherungsbereiches (9) eine Ausnehmung (10) mit in Umfangsrichtung der Lagerbuchse (3) verlaufendem Einstellspiel vorgesehen.

2. Lagereinrichtung nach Anspruch 1,
**dadurch gekennzeichnet,**
**dass** die Ausnehmung (10) als ein umfangsmäßig geschlossenes Langloch ausgebildet ist.

3. Lagereinrichtung nach Anspruch 1,
**dadurch gekennzeichnet,**
**dass** die Ausnehmung (10) als eine auf dem Umfang der Lagerbuchse (3) liegende Tangentialnut (18) ausgebildet ist.

4. Lagereinrichtung nach einem der vorhergehenden Ansprüche,
**dadurch gekennzeichnet,**
**dass** der Stift (7) eine Durchgangsbohrung besitzt.

5. Lagereinrichtung nach einem der vorhergehenden Ansprüche,
**dadurch gekennzeichnet,**
**dass** der Stift (7) in die Nabe (2) eingeschraubt ist.

6. Lagereinrichtung nach einem der vorhergehenden Ansprüche,
**dadurch gekennzeichnet,**
**dass** der Stift (7) einen kreiszylindrischen Zentrierabschnitt (11, 20) zu einer zentrischen Lagerung innerhalb der Nabe (2) besitzt.

7. Lagereinrichtung nach Anspruch 3 oder 5 oder 6, soweit diese Ansprüche auf Anspruch 3 rückbezogen sind,
**dadurch gekennzeichnet,**
**dass** der Stift (7) in einem Nabenbereich liegt, in dem er durch eine dort vorgesehene Bohrung (22) zur Schmierölversorgung der Lagerbuchse (3) einführ- und durch ein Werkzeug verdrehbar ist.

## Claims

1. A bearing device of a turbocharger, more preferably for motor vehicle engines, for mounting a common turbine/compressor shaft (4) in a hub (2) between turbine and compressor wheel (5; 6) formed by a housing (1) of the turbocharger or connected to the latter in a fixed manner via a bearing bush mounted within this hub (2) in a closely delimited floating manner equally relative to the hub (2) and the shaft (4), wherein
- position locking of the bearing bush (3) is provided through a pin (7) radially engaging into the bearing bush (3) from the hub (2),
- a part region of the pin (7) engaging in the bearing bush (3) is designed as circular-cylindrical pin locking region (9),
- the pin (7) is rotatable about a pin or centring axis at least during the assembly,
**characterized by** the features,
- the pin locking region (9) is eccentrically offset relative to the pin or centring axis,
- in the bearing bush (3) for the engagement of the pin locking region (9) a recess (10) with adjusting play running in circumferential direction of the bearing bush (3) is provided.

2. The bearing device according to Claim 1, **characterized in that** the recess (10) is designed as circumferentially closed elongated hole.

3. The bearing device according to Claim 1, **characterized in that** the recess (10) is designed as a tangential groove (18) located on the circumference of the bearing bush (3).

4. The bearing device according to any one of the preceding Claims, **characterized in that** the pin (7) has a through-bore.

5. The bearing device according to any one of the preceding Claims, **characterized in that** the pin (7) is screwed into the hub (2).

6. The bearing device according to any one of the preceding Claims, **characterized in that** the pin (7) has a circular-cylindrical centring portion (11, 20) for a centric mounting within the hub (2).

7. The bearing device according to Claim 3 or 5 or 6, insofar as these claims make reference to Claim 3, **characterized in that** the pin (7) is located in a hub region in which through a bore (22) for the lubricating oil supply of the bearing bush (3) located there it is insertable and rotatable by a tool.

## Revendications

1. Dispositif de palier d'un turbocompresseur, en particulier pour des moteurs de véhicule automobile, pour la fixation d'un arbre de turbine/de compresseur (4) commun dans un moyeu (2) formé par un carter (1) du turbocompresseur ou relié fixement à celui-ci, disposé entre la roue de turbine et la roue de compresseur (5 ; 6) au moyen d'un coussinet de palier monté pareillement en face du moyeu (2) et de l'arbre (4), de façon flottante et très délimitée à l'intérieur de ce moyeu (2), sur lequel
- un blocage en position du coussinet de palier (3) est défini par une broche (7) s'engageant depuis le moyeu (2) radialement dans le coussinet de palier (3),
- une zone partielle, s'engageant dans le coussinet de palier (3), de la broche (7) est conçue comme zone de blocage de broche (9) cylindrique circulaire,
- la broche (7) peut tourner autour d'un axe de broche ou d'un axe de centrage au moins lors du montage,
**caractérisé par** les caractéristiques suivantes
- la zone de blocage de broche (9) est décalée de façon excentrée par rapport à l'axe de broche ou à l'axe de centrage,
- dans le coussinet de palier (3) est prévu pour l'engagement de la zone de blocage de broche (9) un évidement (10) avec un jeu de réglage prévu dans le sens périphérique du coussinet de palier (3).

2. Dispositif de palier selon la revendication 1,
**caractérisé en ce que**
l'évidement (10) est conçu sous forme d'un trou oblong fermé sur le pourtour.

3. Dispositif de palier selon la revendication 1,
**caractérisé en ce que**
l'évidement (10) est conçu sous forme d'une rainure tangentielle (18) disposée sur le pourtour du coussinet de palier (3).

4. Dispositif de palier selon l'une quelconque des revendications précédentes,
**caractérisé en ce que**
la broche (7) présente un alésage de passage.

5. Dispositif de palier selon l'une quelconque des revendications précédentes,
**caractérisé en ce que**
la broche (7) est vissée dans le moyeu (2).

6. Dispositif de palier selon l'une quelconque des revendications précédentes,
**caractérisé en ce que**
la broche (7) présente une partie de centrage (11, 20) cylindrique circulaire pour une fixation centrée à l'intérieur du moyeu (2).

7. Dispositif de palier selon la revendication 3 ou 5 ou 6, dans la mesure où ces revendications sont rapportées à la revendication 3,
**caractérisé en ce que**
la broche (7) est disposée dans une zone de moyeu dans laquelle elle peut être introduite par un alésage (22) prévu ici pour l'alimentation en huile lubrifiante du coussinet de palier (3) et peut être tournée par un outil.
